Europäisches Patentamt

European Patent Office

Office européen des brevets

(19)

(11) Numéro de publication: **0 172 067**
**B1**

(12) # FASCICULE DE BREVET EUROPEEN

(45) Date de publication du fascicule du brevet:
**22.03.89**

(51) Int. Cl.⁴: **G 01 N 29/04**

(21) Numéro de dépôt: **85401413.1**

(22) Date de dépôt: **11.07.85**

(54) Installation pour le contrôle ultrasonore de pièces en immersion locale.

(30) Priorité: **12.07.84 FR 8411076**

(43) Date de publication de la demande:
**19.02.86 Bulletin 86/8**

(45) Mention de la délivrance du brevet:
**22.03.89 Bulletin 89/12**

(84) Etats contractants désignés:
**DE FR GB IT**

(56) Documents cités:
**EP-A- 0 119 096**
**US-A- 3 255 626**
**US-A- 3 908 445**
**US-A- 4 167 880**
**US-A- 4 403 510**

(73) Titulaire: **AVIONS MARCEL DASSAULT-BREGUET AVIATION, 33, Rue du Professeur Victor Pauchet, F-92420 Vaucresson (FR)**

(72) Inventeur: **Tretout, Hervé, 132, rue Boucicaut, F-92260 Fontenay-Aux-Roses (FR)**
Inventeur: **Pepin, Philippe, 3, rue du Vieux Colombier, F-75006 Paris (FR)**

(74) Mandataire: **Colas, Jean-Pierre et al, Cabinet de Boisse 37, avenue Franklin D. Roosevelt, F-75008 Paris (FR)**

ACTORUM AG

## Description

Domaine de l'invention

La présente invention concerne une installation pour le contrôle ultrasonore de pièces en immersion locale.

Etat de la technique

On sait que la recherche des défauts internes dans des pièces au moyen d'un faisceau d'ultrasons n'est possible, avec une bonne efficacité, que si les ultrasons sont transmis directement à la pièce à partir d'une couche de liquide, qui est en contact avec la pièce et dans laquelle ils se sont propagés. Ce résultat est généralement obtenu en immergeant la pièce à contrôler dans une cuve, qui est remplie généralement d'eau, et dans laquelle est également immergé le transducteur d'ultrasons. Cette méthode a l'inconvénient de donner lieu à une certaine oxydation des pièces métalliques et à des rétentions d'eau dans les pièces en matériaux composites.

Pour pallier ces derniers inconvénients, on a déjà eu recours au procédé dit d'«immersion locale», qui utilise une installation comportant un circuit hydraulique avec une pompe, pour former au moins un jet de liquide, notamment d'eau, et pour le projeter sur la pièce à contrôler, ainsi qu'au moins un transducteur d'ultrasons, disposé de manière que le jet d'eau guide les ultrasons entre le transducteur et ladite pièce, un mouvement relatif étant créé entre celle-ci et le jet d'eau de façon à balayer les différentes zones superficielles de la pièce à contrôler.

Ce procédé peut utiliser soit la transmission des ultrasons à travers la pièce à contrôler, soit leur réflexion par ses défauts internes. Dans le premier cas, deux jets de liquide doivent être projetés sur des faces opposées de la pièce, un émetteur et un récepteur d'ultrasons, distincts l'un de l'autre, devant être couplés respectivement avec les deux jets. Dans le second cas, un seul émetteur-récepteur d'ultrasons peut être couplé avec un jet unique.

En réduisant le temps de contact de chaque zone superficielle de la pièce à contrôler avec l'eau, le procédé d'immersion locale réduit les risques d'oxydation des pièces métalliques et de rétention d'eau dans les pièces en matériaux composites. Il permet en outre de contrôler des pièces à forte absorption ou de forte épaisseur. Enfin, comme la recherche des défauts repose sur un procédé de balayage de la surface de la pièce, il nécessite un positionnement relatif moins précis de la pièce et du jet d'eau, donc aussi du transducteur d'ultrasons.

Le procédé d'immersion locale n'a cependant pas permis de détecter les défauts de pièces avec la même précision et la même certitude que le procédé d'immersion totale, dans une cuve. Cela est dû principalement à la difficulté d'obtenir un jet d'eau dont la pression est parfaitement stable dans le temps. L'instabilité de la pression cause des interférences avec le faisceau d'ultrasons et, par suite, des fluctuations du signal de ce dernier à son entrée dans la pièce à contrôler ou à sa sortie de celle-ci.

D'autre part, il est très difficile d'éviter totalement les tourbillons, sources de perte d'énergie ultrasonore et, par conséquent, de dégradation du rapport signal/bruit, ce qui correspond à un mauvais couplage entre le faisceau d'ultrasons et le jet d'eau qui le guide.

Dans le but de remédier à ces inconvénients, on a proposé, par exemple, dans le document US-A-3 908 445 du 30 Septembre 1975 une installation pour le contrôle ultrasonore de pièce par une technique d'immersion locale, comprenant:
– une source de liquide,
– une pompe alimentée par ladite source,
– une tête de couplage alimentée en liquide par ladite pompe, et capable de diriger vers la pièce à contrôler un jet dudit liquide et un faisceau d'ultrasons contenu dans ledit jet et coaxial à ce jet,
– des moyens sensibles aux ultrasons réfléchis transmis ou diffractés par ladite pièce lorsqu'elle est frappée par ledit jet et ledit faisceau d'ultrasons, ladite tête de couplage comprenant:

a) une première chambre de tranquillisation reliée à la sortie de ladite pompe,

b) une seconde chambre de tranquillisation cylindrique, reliée à ladite première chambre par au moins un canal pour le passage du liquide,

c) un transducteur ultrasonore, capable d'émettre un faisceau d'ultrasons par une face active, dirigée vers l'objet, ladite face active étant située dans la seconde chambre, centrée sur l'axe de ladite seconde chambre et perpendiculaire à cet axe,

d) un convergent coaxial à ladite seconde chambre, et comportant une entrée, reliée à ladite seconde chambre et de rayon R1 au plus égal à celui de ladite seconde chambre, et une sortie de rayon R2 inférieur au rayon R1 de l'entrée et sensiblement égal au rayon choisi par ledit jet, dans lequel on a prévu en outre, dans la seconde chambre, des moyens pour rendre le flot de liquide rectiligne qui consistent en une série de tubes parallèles à l'axe, disposés les uns à côté des autres.

Cette disposition n'a pas eu semble-t-il le succès prévu, dans doute à cause des perturbations qui apparaissent à l'entrée et à la sortie des tubes parallèles à l'axe. En outre, cette solution est coûteuse et compliquée.

Il est cependant évident que le résultat ne serait pas meilleur si on supprimait cet ensemble de tubes.

L'homme de métier pourrait avoir dans l'esprit l'idée que le dessin de l'intérieur de la tête de couplage pourrait avoir une influence sur la nature et l'importance des turbulences dans le liquide.

Dans le brevet US-A-3 908 445, les deux chambres de tranquillisation sont cylindriques, de diamètre différent, et reliées par des conduits radicaux, et la partie de raccordement du convergent fait avec l'axe un angle qui diminue progressivement depuis 45° environ, au contact de la seconde chambre, jusqu'à 0°.

Dans le brevet US-A-3 255 626, les conduits de raccordement sont axiaux; et la seconde chambre est tronconique puis cylindrique, alors que la partie de raccordement est tronconique.

Dans le brevet US-A-4 403 510, les conduits de raccordement sont obliques sur l'axe, la seconde chambre est tronconique avec un angle sur l'axe de 30° environ et elle se raccorde directement au conduit de sortie.

Dans le brevet US-A-4 167 880, il n'y a pas de première chambre de tranquillisation, et la chambre unique de tranquillisation, qui contient la face active du transducteur, est reliée au conduit de sortie par un simple épaulement perpendiculaire à l'axe.

Il ressort de cette énumération que le problème de la forme intérieure optimale de la buse n'avait pas, jusqu'ici, été clairement posé ni résolu.

B. Gay et al., dans l'article intitulé: «On the Design of the Contraction Section for a Wind Tunnel», Journal of Applied Mechanics, March 1973, ont exposé une méthode mathématique de calcul de la forme du convergent d'un tunnel parcouru par l'air avec un gradient de pression réglable, dans le cas d'un écoulement à deux dimensions seulement, la densité étant supposée constante.

Le calcul a été fait à partir d'une loi de répartition de vitesse le long de l'axe:

$$f_1(x) = \alpha + \beta \int_0^x Z(x)dx + \gamma e^{-kx^3},$$

où $\alpha$, $\beta$, $\gamma$ et $\underline{k}$ sont des constantes et

$$Z(x) = \frac{1}{\sqrt{2\pi}} e^{-x^2/2},$$

à l'aide d'une fonction d'écoulement:

$$\Psi(x, y) = f_1(x).y + \ldots + f_{n+1}(x) y^{2n+1} + \ldots$$

$$\text{avec } f_{(n+1)}(x) = -\frac{f''_{n(x)}}{2n(n+1)}.$$

L'Article de B. Gay et al. indique que toutes les dérivées de la fonction $f_1(x)$ peuvent être calculées en termes de polynômes d'Hermite:

$$f_1^{(n+1)}(x) = \beta Z^{(n)}(x) + \gamma \sqrt{2\pi} \, Z^{(n-1)}(x\sqrt{2k}) \sqrt{2k^{n+1}}$$

$$\text{avec } Z^{(n)}(x) = (-1)^n H_n(x) Z(x).$$

L'article de B. Gay et al. fournit des valeurs des constantes $\alpha$, $\beta$, $\gamma$ et $\underline{k}$ qui conviennent, dans le cas du problème étudié, pour obtenir une contraction rapide et un gradient de vitesse régulier. L'expérience a montré que ces valeurs ne sont pas adaptées à un des problèmes qui sont à l'origine de la présente invention, et qui est de déterminer la forme d'un convergent susceptible d'éliminer les turbulences dans le cas d'un liquide.

Il faut noter aussi que, même si on pouvait déduire directement de cet article la forme optimale du convergent, c'est-à-dire de la partie de raccordement entre la seconde chambre et le conduit de sortie, cela ne fournirait pas d'indication sur la structure du reste de l'installation.

Objet de l'invention

L'objet de l'invention est de fournir une installation pour le contrôle ultrasonore de pièces en immersion locale qui permette de déterminer les défauts avec une précision et une certitude pratiquement égales à celles qu'on obtient avec une installation fonctionnant en immersion totale.

Un autre objet de l'invention est de fournir une telle installation qui soit facilement et rapidement adaptable au contrôle de pièces ayant des caractéristiques différentes de forme, de nature, ou de nature des défauts recherchés.

Résumé de l'invention

L'invention fournit donc une installation pour le contrôle ultrasonore de pièce par une technique d'immersion locale, comprenant:
- une source de liquide,
- une pompe alimentée par ladite source,
- une tête de couplage alimentée en liquide par ladite pompe, et capable de diriger vers la pièce à contrôler un jet dudit liquide et un faisceau d'ultrasons contenu dans ledit jet et coaxial à ce jet,
- des moyens sensibles aux ultrasons réfléchis transmis ou diffractés par ladite pièce lorsqu'elle est frappée par ledit jet et ledit faisceau d'ultrasons, ladite tête de couplage comprenant:

a) une première chambre de tranquillisation reliée à la sortie de ladite pompe,

b) une seconde chambre de tranquillisation cylindrique, reliée à ladite première chambre par au moins un canal pour le passage du liquide,

c) un transducteur ultrasonore, capable d'émettre un faisceau d'ultrasons par une face active, dirigée vers l'objet, ladite face active étant située dans la seconde chambre, centrée sur l'axe de ladite seconde chambre et perpendiculaire à cet axe,

d) un convergent coaxial à ladite seconde chambre, et comportant une entrée, reliée à ladite seconde chambre et de largeur L1 au plus égale à celle de ladite seconde chambre, et une sortie de largeur L2 inférieure à la largeur L1 de l'entrée et sensiblement égale à la largeur choisie par ledit jet, la forme dudit convergent étant sensiblement celle qui est obtenue par un calcul dans lequel on donne une valeur constante à l'expression:

$$Q(xy) = u_1(x).y + \ldots + u_{n+1}(x)y^{2n+1} + \ldots \quad (1)$$

dans laquelle:

$$u_1(x) = \frac{a^2+1}{2a^2} + \frac{1-a^2}{a^2} \int_0^x Z(x)dx$$

$$u_{n+1}(x) = \frac{-u_n''(x)}{2n(n+1)}$$

$$Z(x) = \frac{1}{\sqrt{2\pi}} e^{-x^2/2} \text{ et } a = L2/L1$$

toutes les dérivées de $u_1(x)$ étant calculées à partir des polynômes d'Hermite $H_n(x)$ avec

$$u_1^{(n+1)}(x) = Z^{(n)}(x) \text{ et } Z^{(n)}(x) = (-1)^n H_n(x) Z(x),$$

le calcul étant effectué pour $x = 0$ à $x = 1$ quand $y = L2/2$ après itérations; et la distance entre la face active du transducteur et la sortie du convergent étant telle que ladite sortie est à la fin de la zone de Fresnel de l'onde ultrasonore émise par le transducteur.

L'invention aussi concerne une tête de couplage comme décrit ci-dessus.

Si la forme du convergent est celle d'une surface de révolution, les largeurs L1 et L2 sont égales aux diamètres 2R1 et 2R2 d'entrée et de sortie, mais l'invention n'est pas limitée à une telle forme, et la section transversale du convergent peut être allongée, ressemblant à une ellipse par exemple, pour s'adapter à un transducteur dont la face active serait rectangulaire. Dans ce cas, les largeurs L1 et L2 doivent être mesurées dans le même plan axial. Le mot «cylindrique» employé dans le présent texte s'applique aussi bien à des formes à section aplatie qu'à des formes à section circulaire.

Suivant des modalités préférées:

Le convergent est prolongé dans le sens du jet par un embout cylindrique, de même section que celle de la sortie du convergent, et de longueur définie par le fait que la surface de la pièce à contrôler qui est frappée par le faisceau d'ultrasons, est sensiblement sur un maximum de pression axiale ultrasonore défini par le couple transducteur-convergent utilisé, et que le libre parcours du jet de liquide entre l'extrémité dudit embout et ladite surface de la pièce doit être le plus court possible, compte tenu des conditions opératoires, la longueur de l'embout étant en outre supérieure à quatre fois sa plus petite largeur ou son diamètre.

La seconde chambre de tranquillisation est fermée, du côté de l'objet, par une paroi perpendiculaire à l'axe, qui porte une saillie dirigée vers l'intérieur de ladite chambre, cette saillie présentant une ouverture axiale tronconique dont la largeur diminue en s'éloignant de la chambre pour se raccorder à l'entrée du convergent, soit directement, soit par l'intermédiaire d'une partie cylindrique de même largeur que ladite entrée.

L'extrémité de l'embout cylindrique ou du convergent est adaptée pour éviter tout ruissellement d'eau susceptible de perturber le jet et, de préférence, dans ce but, une rigole annulaire est usinée autour de ladite extrémité.

La paroi latérale de la seconde chambre et le convergent font partie d'un corps creux monobloc qui est fixé de façon étanche sur la première chambre et qui comprend aussi, s'ils existent, la paroi de la seconde chambre, la partie cylindrique et l'embout cylindrique. Dans ce cas, suivant une modalité particulièrement avantageuse ledit corps creux est fixé de façon amovible sur la première chambre, et il est prévu une série de corps creux analogues et interchangeables, correspondant chacun à une pression acoustique et/ou une fréquence ultrasonore différente.

Les parois d'au moins une des chambres sont en matière transparente telle que polyacrylate de méthyle, alors qu'au moins le convergent et l'embout sont en matière absorbant les ultrasons, telle que polytétrafluoréthylène, ou revêtus intérieurement d'une telle matière.

Les conduits raccordant les première et deuxième chambres sont au moins au nombre de neuf, disposés symétriquement, le rapport de leur longueur à leur diamètre est au moins égal à 4, chacun présente dans la première chambre de tranquillisation une entrée en forme d'embouchure de trompette, et leurs axes respectifs sont inclinés d'un angle $\beta$ au moins égal à 10 degrés sur l'axe des chambres.

Le transducteur d'ultrasons est logé dans le canal formé par un manchon tubulaire, traversant axialement la première chambre de tranquillisation, et par un perçage de la paroi qui sépare les deux chambres, aligné avec ledit manchon, la face active dudit transducteur étant disposée transversalement à l'axe de la seconde chambre de tranquillisation, de façon à être au contact du liquide qui y circule et le perçage de la paroi est entouré par une collerette tronconique dont l'angle au sommet est par exemple voisin de 60 degrés, et près de la base de laquelle débouchent les conduits.

La pompe est une pompe verticale immergée comportant une turbine à aubes, un accumulateur est inséré entre la pompe et la première chambre de tranquillisation, et la fréquence de résonance de cet accumulateur est adaptée à la fréquence de pulsation des aubes de la turbine.

Brève description des dessins

L'invention va être exposée plus en détail à l'aide d'exemples pratiques, non limitatifs, illustrés à l'aide des figures parmi lesquelles:

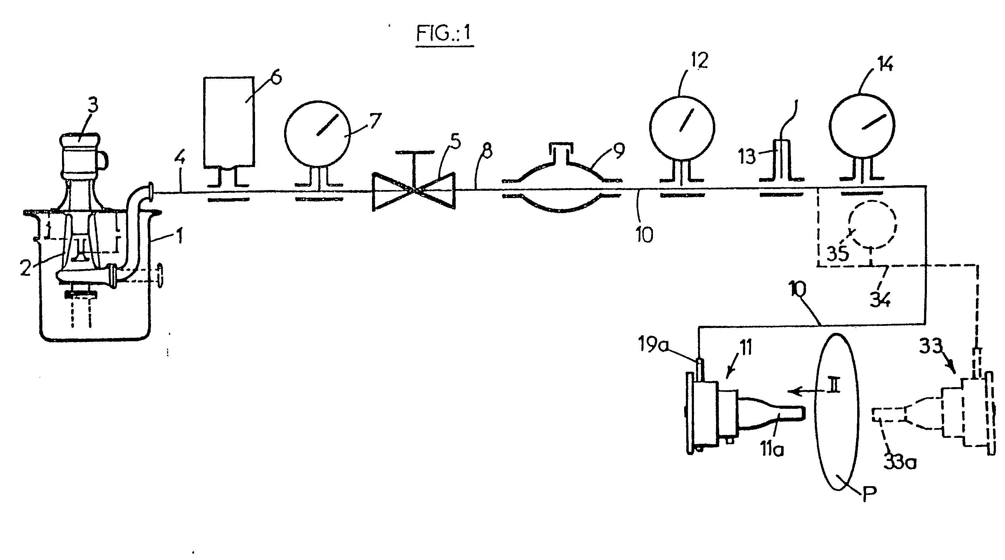

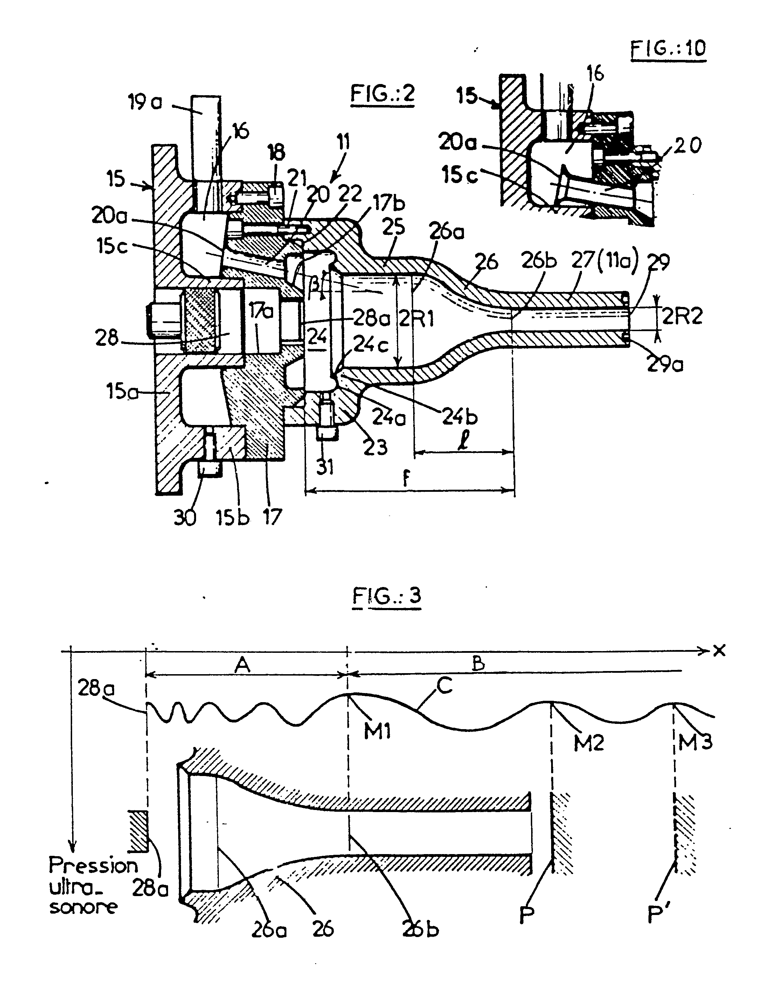

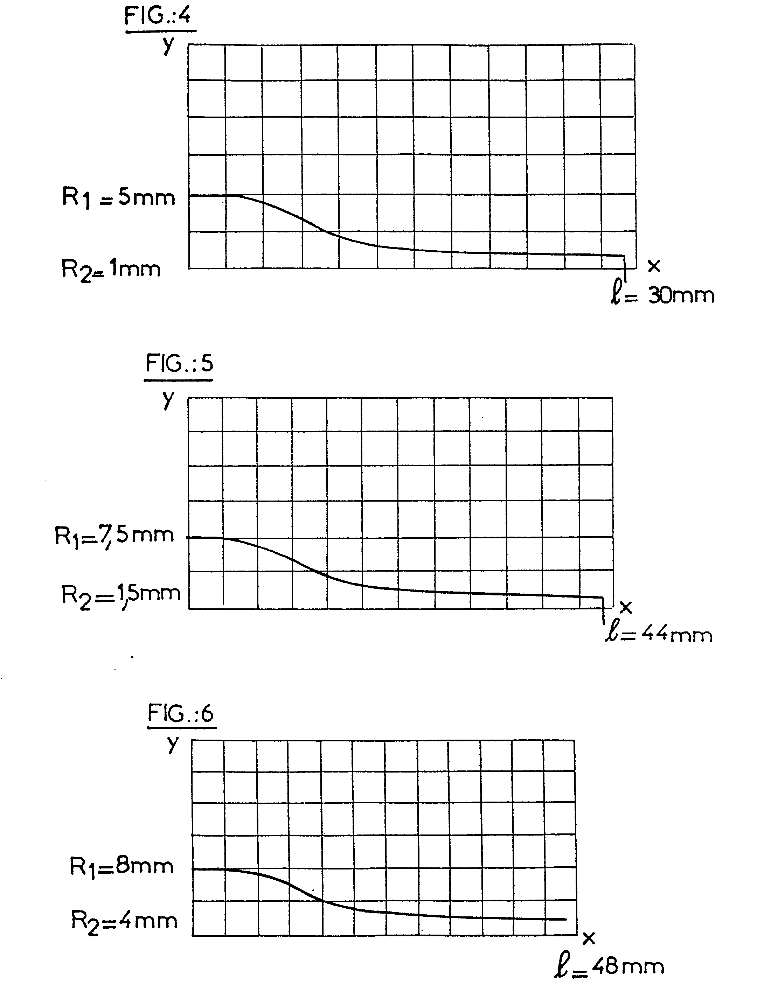

La figure 1 est une vue schématique d'une forme de réalisation. La figure 2 est une vue en coupe axiale de la tête de couplage de l'installation de la figure 1. La figure 3 est un schéma montrant la position de certaines parties de la tête de couplage par rapport au champ ultrasonore. Les figures 4 à 9 sont des diagrammes illustrant différents profils du convergent des figures 2 et 3. La figure 10 est une coupe partielle, analogue à la figure 2, montrant une variante de forme des conduits reliant les chambres de tranquillisation.

Description détaillée de l'invention

L'installation pour le contrôle ultrasonore de pièces en immersion locale, qui est illustrée schématiquement sur la figure 1, comprend tout d'abord une cuve 1, remplie d'eau, dans laquelle est entièrement immergée une pompe verticale 2, avec un presse-étoupe ou une étanchéité mécanique, immergée de façon à éviter toute entrée d'air; il s'agit par exemple d'une pompe comportant une turbine à aubes, entraînée à une vitesse de rotation constante par un moteur électrique 3. Un tuyau 4 relie le refoulement de la pompe 2 à l'entrée d'une vanne de réglage de débit, 5, avantageusement du type à siège oblique. En amont de cette vanne 5 sont branchés, en parallèle sur le tuyau 4, un accumulateur 6 et un manomètre de contrôle 7. L'accumulateur 6 est d'un type courant, renfermant par exemple un matelas d'air, séparé du liquide par une membrane souple. De préférence, cet accumulateur 6 est dimensionné de manière que sa fréquence de résonance soit adaptée à la fréquence de pulsation des aubes de la turbine de la pompe 2. Moyennant cette condition, il y a une forte réduction des fluctuations de la pression en aval de l'accumulateur 6, au rythme de la rotation de la turbine de la pompe 2. Cette régularisation de la pression est d'autant meilleure que l'accumulateur 6 est plus proche du refoulement de la pompe 2. La valeur de la pression est ajustée en réglant le débit à l'aide de la vanne de réglage 5, dont le siège oblique réduit la production de turbulences. Un tuyau 8 raccorde la sortie de la vanne de réglage 5 à l'entrée d'un séparateur d'air 9, ou d'un dégazeur, qui élimine les dernières traces de gaz qui auraient pu être entraînées par le liquide. Un tuyau 10 raccorde la sortie du séparateur d'air 9 à l'entrée d'une tête de couplage 11, dont une forme de réalisation particulièrement avantageuse sera décrite ultérieurement à l'aide des figures 2 et 3. Sur ce tuyau 10 sont montés, en parallèle, un manomètre 12 pour contrôler la pression de sortie, un capteur de pression, 13, destiné à produire par exemple un signal électrique proportionnel à la pression dans le tuyau 10, et enfin un débitmètre 14. On voit enfin, sur la figure 1, que la tête de couplage 11 se termine par un ajutage cylindrique, 11a, dont l'extrémité, d'où sort un jet d'eau guidant un faisceau d'ultrasons, comme on le décrira ultérieurement plus en détail, est déplacée, par exemple manuellement, ou par des moyens automatiques connus, qu'il n'est pas nécessaire de décrire, à faible distance de l'une des surfaces extérieures de la pièce P à contrôler; dans la zone d'impact du jet d'eau sur la surface extérieure de la pièce P, les ultrasons pénètrent à l'intérieur de cette dernière et y sont réfléchis par les défauts internes de celle-ci, dont la détection est effectuée à partir de ces réflexions, selon des procédés bien connus, qu'il n'est pas nécessaire de décrire.

Sur les figures 2 et 3, on a désigné par.15 une pièce comportant une semelle sensiblement plane 15a, et une paroi latérale cylindrique, 15b, qui, avec un manchon tubulaire concentrique, 15c, délimite une première chambre de tranquillisation 16, annulaire et concentrique au manchon tubulaire 15c. On a désigné par 17 une plaque qui vient en appui sur les extrémités de la paroi 15b et du manchon 15c pour fermer la chambre 16. La pièce 15 et la plaque 17 sont avantageusement en matière transparente telle que du polyméthacrylate, pour permettre un contrôle visuel de l'absence de bulles dans la chambre 16. La plaque 17 est fixée sur la pièce 15 par des vis 18. Elle peut aussi être fixée par collage. La paroi latérale 15b de la première chambre de tranquillisation 16 est traversée par un nombre au moins égal à trois de conduites radiales, dont une seule 19a est représentée figure 2, qu'un distributeur — non représenté – alimente à partir de l'extrémité du tuyau 10 (figure 1) la plus proche de la tête de couplage 11. Les conduites radiales d'alimentation, telles que 19a à 19c, sont disposées de préférence régulièrement autour de la paroi cylindrique 15b, comme visible sur la figure 2. La paroi 17 est traversée par au moins neuf conduits 20, ayant un rapport de la longueur au diamètre au moins égal à 4, et disposés de préférence symétriquement autour de l'axe commun, de la paroi cylindrique 15b et du manchon tubulaire 15c. Chaque conduit 20 présente, dans la première chambre de tranquillisation 16, une entrée 20a, en forme d'embouchure de trompette, et son axe est incliné sur l'axe de la tête 11 d'un angle β au moins égal à 10 degrés. D'autre part, un émetteur-récepteur d'ultrasons, 28, d'un type connu, qu'il n'est pas nécessaire de décrire en détail, a son boîtier cylindrique encastré à l'intérieur du manchon tubulaire 15c de la pièce 15, de façon que sa face active, 28a, soit disposée, transversalement à l'axe, au débouché, dans la seconde chambre de tranquillisation 24, d'un perçage 17a, prolongeant, à travers la paroi 17, le canal intérieur du manchon tubulaire 15c. Dans cette forme de réalisation, le perçage 17a de la paroi 17 est entouré par une collerette tronconique, 17b, dont l'angle au sommet est par exemple voisin de 60 degrés, et près de la base de laquelle débouchent les conduits 20.

Sur la cloison 17, du côté opposé à la première chambre de tranquillisation, est fixé, à l'aide de vis 21, un corps creux de révolution autour de l'axe de la tête, avec interposition d'un point d'étanchéité 22. Ce corps creux comprend une partie cylindrique 23 qui définit, avec la cloison 17 et une autre paroi 24a perpendiculaire à l'axe, une seconde chambre de tranquillisation 24, dans laquelle débouchent les conduits 20. La paroi 24a porte une saillie 24b dirigée vers l'intérieur de ladite chambre. Cette saillie présente une ouverture axiale tronconique 24c dont le diamètre diminue en s'éloignant de la chambre 24, et qui se raccorde à une partie cylindrique 25, qui fait encore partie du corps creux. La hauteur de la saillie 24b est d'environ 15% de la longueur axiale de la chambre 24.

La partie cylindrique 25 se prolonge par un convergent 26, dont le rayon, R1, à son entrée 26a, est le même que celui de la partie cylindrique 25.

La forme de ce convergent et sa position sont des éléments très importants de l'invention, et vont être exposés plus en détail.

Le tracé du convergent doit être tel que l'écoulement du liquide y soit le plus régulier possible, avec le minimum de tourbillons susceptibles de diffracter partiellement l'énergie sonore.

Les travaux des inventeurs ont permis d'établir que ce résultat est obtenu lorsque le tracé de la surface interne du convergent 26 est celui qui résulte du calcul indiqué plus haut.

Ce calcul découle d'une extrapolation de l'article de Gay et al. cité plus haut.

On déduit des formules (2) et (3) de la page 309 du même article que la vitesse axiale d'un fluide en écoulement dans un convergent est donnée par l'équation

$$u_{1(x)} = \alpha + \beta \int_0^1 \frac{e^{-x^2}}{\sqrt{2\pi}} \, dx + \gamma e^{-kx^3},$$

où $u_1$ désigne la vitesse du fluide selon l'axe, $x$ la distance du point courant à l'entrée du convergent et $l$ la longueur du convergent.

Cette relation permet de calculer une valeur approchée de la fonction de courant $\psi\,(x, y)$ au point courant ($y$ étant la distance de ce point à l'axe), grâce au développement en série suivant:

$$\Psi(xy) = u_1(x)\, y + \ldots + u_{n+1}(x)\, y^{2n+1} + \ldots$$

$$\text{avec } u_{n+1}(x) = \frac{u_n^{\prime\prime\prime 1s}(x)}{2n\,(2n+1)}.$$

Ces équations sont déduites des équations (1) et (2) qui figurent en tête de l'article mentionné plus haut.

Le profil du convergent optimal est évidemment choisi pour qu'une génératrice de la paroi du convergent coïncide avec une ligne de courant du liquide.

Les études et expériences faites par les inventeurs ont montré qu'avec les valeurs des constantes $\alpha$, $\beta$, $\gamma$ et $k$ données dans l'article précité, il n'était pas possible d'obtenir un convergent donnant le résultat cherché, c'est-à-dire un minimum de turbulences susceptibles de perturber le faisceau ultrasonore, mais qu'en donnant des valeurs adéquates aux constantes $\alpha$, $\beta$ et $\gamma$ on pouvait obtenir, avec le même principe de calcul, un résultat convenable. Ces valeurs sont:

$$\alpha = \frac{a^2 + 1}{2a^2} \quad ; \quad \beta = \frac{1 - a^2}{a^2} \quad ; \quad \gamma = 0$$

avec $a = L2/L1$; $a$ est le rapport de contraction, il est égal au rapport des rayons d'entrée et de sortie (R1, R2) du convergent quand celui-ci est de révolution.

Ces valeurs, transposées dans les équations de l'Article Gay et al., aboutissent à celles qui ont été données plus haut, et permettent, au moyen d'un programme d'ordinateur approprié de tracer les lignes de courant et des familles de profils de convergent, par exemple pour différentes valeurs de R2 avec soit R1 constant, soit $a = R2/R1$ constant. Ces formes de profils de convergent assurent un minimum de perturbations dans le convergent et une vitesse en sortie de celui-ci la plus uniforme possible.

Les figures 4 à 9 du dessin annexé sont des diagrammes, utilisant les coordonnées $x$ et $y$ précédemment définies, qui représentent cinq profils possibles du convergent selon la présente invention.

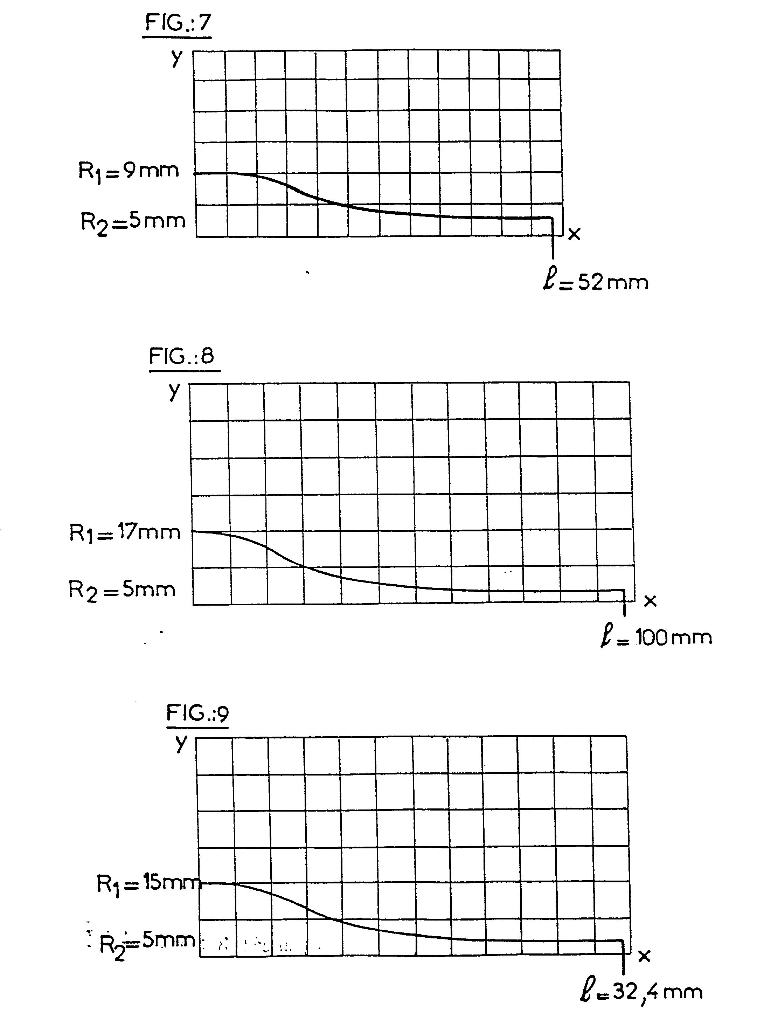

On y a indiqué en abscisses les valeurs de $l$ correspondant aux différents couples de valeurs des rayons R1 et R2. La comparaison, par exemple, des figures 7 et 8 montre que, pour un même rayon de sortie R2 = 5 mm, $l$ = 52 mm si R1 = 9 mm et $l$ = 100 mm si R1 = 17 mm.

Les travaux des inventeurs ont porté aussi sur la propagation des ultrasons à travers un écoulement de liquide comportant un convergent suivi d'une partie sensiblement cylindrique.

La figure 3 comprend une courbe C qui montre les fluctuations de la pression ultrasonore axiale dans ces conditions, qui sont différentes de celles qu'on observe dans un milieu indéfini, le long de l'axe du faisceau.

A partir de l'émetteur 28a supposé plan la pression ultrasonore comporte une première zone A dite «champ proche», ou «zone de Fresnel» où la pression ultrasonore présente des variations rapides, et une seconde zone B, dite «champ lointain», où les variations sont beaucoup plus adoucies. La longueur de la zone de champ proche est aussi désignée comme la «distance focale f» de l'émetteur si celui-ci est du type dit «focalisé».

La limite entre les deux zones correspond à un maximum de pression M1 qui constitue la fin de la zone de Fresnel, et d'autres maxima de pression M2, M3, etc. se trouvent à la suite. L'origine exacte des maxima M2, M3 n'est pas encore clairement établie, mais les inventeurs ont constaté que les meilleurs résultats sont obtenus quand la sortie 26b du convergent coïncide avec le maximum M1 qui marque la fin de la zone de Fresnel, et que le point d'impact du faisceau ultrasonore sur l'objet à examiner se trouve sur le premier M2 ou le second, M3 des maxima suivants. Sur la figure 3, P et ensuite P' représentent donc les deux meilleures positions possibles. La raison pour laquelle des maxima plus lointains (non représentés) ne sont pas préférés est essentiellement l'intensité croissante des perturbations dues aux turbulences.

Le choix de R1 et R2 dépend du débit de liquide et de sa viscosité. Il existe une valeur minimale de R1 pour chaque débit qui correspond à une vitesse maximale à ne pas dépasser dans la partie cylindrique 25 pour obtenir un flux régulier de liquide, et la valeur de R2 dépend d'une part de la taille des défauts à détecter et plus généralement de la nature de la pièce à contrôler et, d'autre part, pour un débit donné, de la vitesse à obtenir pour le jet.

Au-delà de la sortie 26b du convergent, le corps creux se prolonge encore par un embout cylindrique 27, de même rayon R2. Le rôle de cet embout est de protéger le jet du contact de l'atmosphère, et des perturbations qui en résultent, jusqu'au voisinage de la surface de la pièce à contrôler.

La longueur de l'embout 27 est, de préférence, au moins égale à quatre fois son diamètre, ou s'il a une section aplatie, sa plus petite largeur, pour une bonne stabilisation des vitesses après le convergent. D'autre part, il doit être assez long pour protéger le jet des perturbations extérieures et empêcher une inflexion du jet sous l'effet d'un déplacement de celui-ci dans le cas où l'on opère en déplaçant le jet par rapport à la pièce à inspecter. On notera à ce propos que, quoique les figures semblent montrer que l'axe du jet est horizontal, il est en général préférable qu'il soit vertical, pour éviter une inflexion sous l'effet de la pesanteur. D'un autre côté, l'embout doit être assez court pour permettre un échappement satisfaisant du liquide projeté et d'éviter tout risque de choc entre l'embout et la pièce à contrôler lors de leurs déplacements respectifs.

La sortie 29 du conduit cylindrique 27 du corps creux est adaptée pour éviter, surtout lorsqu'elle est placée verticalement, tout ruissellement d'eau, susceptible de perturber le jet; à cet effet, une rigole annulaire 29a est usinée autour de la sortie 29 du conduit 27. Des dispositifs sont prévus pour purger le liquide circulant dans les chambres 16 et 24, des bulles d'air qu'il entraîne; il s'agit de vis de purge 30 et 31.

Comme on l'a dit, les parois latérales de la chambre 24, sa paroi frontale 24a, la partie cylindrique 25, le convergent 26 et l'embout 27 font partie d'un corps creux unique, qui est fixé de façon amovible par des vis 21 sur la plaque 17.

Quoiqu'un seul corps creux soit représenté, le lecteur concevra que l'installation, pour être adaptée à des conditions de contrôle diverses, est équipée d'un jeu de corps creux interchangeables. En effet, selon la nature et la taille des défauts à détecter, ou leur nombre, on aura besoin de jets de largeur L2 différentes. La vitesse du jet doit être choisie en fonction notamment de la vitesse de déplacement relative de la tête de couplage et des objets à contrôler, et de l'orientation verticale ou horizontale du jet. Ces données conditionnent le débit, et par suite, la valeur de L1 et la forme du convergent, ce qui, en retour, influence les caractéristiques acoustiques de l'ensemble pour un transducteur donné, et donc la position de la sortie du convergent et la longueur de l'embout. Des conditions de propriétés de la matière dont est faite la pièce à contrôler, et encore de nature des défauts obligent à prévoir l'emploi de plusieurs transducteurs ayant des fréquences différentes. La structure des pièces 15 et 17 permet l'échange facile d'un transducteur pour un autre, mais cet échange entraînera un changement de corps creux pour les raisons exposées plus haut.

On observera que, dans une installation comportant des corps creux interchangeables fournissant des jets de diamètre différent, le débitmètre 14 et la vanne de réglage de débit 5 sont des accessoires indispensables. En effet, chaque corps creux est associé à un débit bien défini, pour obtenir les meilleurs résultats de mesures.

Dans la réalisation représentée, le corps creux est en polytétrafluoréthylène, produit qui présente une forte absorption acoustique. Il peut être en un autre matériau, de préférence ayant aussi une forte absorption acoustique. Cette propriété intervient dans la détermination de la forme du corps creux, du fait qu'elle a une influence sur la propagation des ondes ultrasonores.

Le tuyau 10 (figure 1) et le distributeur, non représenté, alimentent, par les trois conduites radiales, 19a à 19c, la première chambre de tranquillisation 16, avec des courants d'eau dont le débit est déterminé avec précision, dont la pression est sujette à des fluctuations pratiquement négligeables, et qui n'entraînent pratiquement pas de bulles d'air ou de gaz. En raison de la disposition symétrique des conduites d'alimentation 19a à 19c, il se produit, dans la première chambre de tranquillisation 16, un écoulement très régulier, qui alimente la seconde chambre de tranquillisation, 24, par l'intermédiaire des conduits 20, disposés également de façon symétrique autour de l'axe, de telle sorte qu'il s'établit également un écoulement très régulier dans cette seconde chambre de tranquillisation. C'est dans cette chambre 24 que les ultrasons produits par la face active, 28a, de l'émetteur 28, commencent à se propager dans l'écoulement mentionné, puis dans l'écoulement, également régulier et peu turbulent, qui, partant de ladite seconde chambre 24, traverse ensuite la buse 25, 26 et 27 de la buse, pour former, à la sortie 29, un jet, qui est projeté sur la pièce à contrôler P placée à un maximum de pression ultrasonore axiale comme illustré schématiquement sur la figure 1. Pendant la totalité du parcours du liquide, notamment de l'eau, dans la seconde chambre de tranquillisation 24, ainsi que dans les éléments 25, 26 et 27 de la buse, le faisceau d'ultrasons ne subit que très peu de diffractions en raison des très faibles quantités d'air ou de gaz entraînées par le liquide, et la majeure partie de l'énergie ultrasonore se propage dans la direction de l'axe, vers la droite de la figure 3, en raison de l'écoulement régulier, peu tourbillonnaire, du liquide. Comme en outre la pression de ce dernier reste très sensiblement constante, la partie du jet sortant en 29 de l'ajutage 27, qui vient frapper la surface périphérique de la pièce à contrôler P, présente une grande stabilité, ce qui assure une transmission avec un rendement élevé de l'énergie ultrasonore à la pièce P. Les ultrasons réfléchis par les défauts internes de la pièce P, en sortent par la surface de celle-ci, sur laquelle le jet d'eau est projeté, et ce dernier les guide ensuite vers le transducteur 28, qui fonctionne également en récepteur.

Sur la figure 1, on a représenté, en traits interrompus, une seconde tête 33, pourvue d'un ajutage 33a pour projeter un second jet de liquide sur la zone de la pièce P contrôlée d'où émergent les ultrasons transmis à travers ladite pièce P, à partir du premier jet, projeté par la tête 11. La seconde tête 33, qui peut être identique à la première tête 11, renferme cependant un récepteur pour les ultrasons qui ont été émis par l'émetteur de ladite tête 11, et qui ont traversé de part en part la pièce P. La seconde tête 33 peut être alimentée en liquide par une dérivation 34 du circuit hydraulique au-delà du capteur 13, cette dérivation comportant un débitmètre 35.

La figure 10 montre une variante de la forme de l'entrée des conduits 20. Selon cette variante, la collerette 20a, en forme d'embouchure de trompette, est en saillie sur la paroi 17 qui ferme la première chambre de tranquillisation 16 et avance jusque vers le milieu de la longueur de cette chambre. Cette forme, un peu plus compliquée que celle de la figure 2, réduit encore les turbulences, surtout dans le cas de débits importants.

## Revendications

1. Installation pour le contrôle ultrasonore de pièce par une technique d'immersion locale, comprenant:
   – une source (1) de liquide,
   – une pompe (2) alimentée par ladite source,
   – une tête de couplage (11) alimentée en liquide par ladite pompe, et capable de diriger vers la pièce à contrôler un jet dudit liquide et un faisceau d'ultrasons contenu dans ledit jet et coaxial à ce jet,
   – des moyens sensibles aux ultrasons réfléchis transmis ou diffractés par ladite pièce lorsqu'elle est frappée par ledit jet et ledit faisceau d'ultrasons, ladite tête de couplage comprenant:
   a) une première chambre de tranquillisation (16) reliée à la sortie de ladite pompe,
   b) une seconde chambre de tranquillisation (24) cylindrique, reliée à ladite première chambre par au moins un canal pour le passage du liquide,
   c) un transducteur ultrasonore (28), capable d'émettre un faisceau d'ultrasons par une face active, dirigée vers l'objet, ladite face active étant située dans la seconde chambre, centrée sur l'axe de ladite seconde chambre et perpendiculaire à cet axe,
   d) un convergent (26) coaxial à ladite seconde chambre, et comportant une entrée (26a), reliée à ladite seconde chambre et de largeur (L1) au plus égal à celle de ladite seconde chambre, et une sortie (26b) de largeur (L2) inférieur à la largeur (L1) de l'entrée et sensiblement égal à la largeur choisi par ledit jet, caractérisé en ce que la forme dudit convergent est sensiblement celle qui est obtenue par un calcul dans lequel on donne une valeur constante à l'expression:

$$Q(xy) = u_1(x).y + \ldots + u_{n+1}(x)y^{2n+1} + \ldots \quad (1)$$

dans laquelle:

$$u_1(x) = \frac{a^2+1}{2a^2} + \frac{1-a^2}{a^2} \int_0^x Z(x)dx$$

$$u_{n-1}(x) = \frac{-u_n''(x)}{2n(n+1)}$$

$$Z(x) = \frac{1}{\sqrt{2\pi}} e^{-x^2/2} \text{ et } a = L2/L1$$

toutes les dérivées de $u_1(x)$ étant calculées à partir des polynômes d'Hermite $H_n(x)$ avec

$$u_1^{(n+1)}(x) = Z^{(n)}(x) \text{ et } Z^{(n)}(x) = (-1)^n H_n(x) Z(x),$$

le calcul étant effectué pour $x = 0$ à $x = 1$ quand $y = L2/2$ après itérations; et la distance entre la face active (28a) du transducteur et la sortie (26b) du convergent est telle que ladite sortie est à la sortie de la zone de Fresnel de l'onde ultrasonore émise par le transducteur (28).

2. Installation selon la revendication 1, caractérisée en ce que le convergent (26) est prolongé dans le sens du jet par un embout cylindrique (27), de même section que celle de la sortie du convergent, et de longueur définie par le fait que la surface de la pièce à contrôler, qui est frappée par le faisceau d'ultrasons, doit être située à un maximum de pression axiale ultrasonore défini par le couple transducteur-convergent utilisé, et que le libre parcours du jet de liquide entre l'extrémité dudit embout et ladite surface de la pièce doit être le plus court possible, compte tenu des conditions opératoires, la longueur de l'embout étant en outre au moins égale à quatre fois sa plus grande largeur ou son diamètre.

3. Installation selon la revendication 1 ou 2, caractérisée en ce que la seconde chambre de tranquillisation (24) est fermée, du côté de l'objet, par une paroi (24a) perpendiculaire à l'axe, qui porte une saillie (24b) dirigée vers l'intérieur de ladite chambre, cette saillie présentant une ouverture axiale (24c) dont le diamètre diminue en s'éloignant de la chambre pour se raccorder à l'entrée (26a) du convergent, soit directement, soit par l'intermédiaire d'une partie cylindrique (25) de même diamètre que ladite entrée.

4. Installation selon l'une des revendications 1 à 3, caractérisée en ce que l'extrémité (29) de l'embout cylindrique (27) ou du convergent (26) est adaptée pour éviter tout ruissellement d'eau susceptible de perturber le jet.

5. Installation selon la revendication 4, caractérisée en ce que, pour éviter tout ruissellement d'eau, une rigole annulaire est usinée autour de ladite sortie (29).

6. Installation selon l'une des revendications 1 à 5, caractérisée en ce que la paroi latérale de la seconde chambre et le convergent font partie d'un corps creux monobloc qui est fixé de façon étanche sur la première chambre et qui comprend aussi, s'ils existent, la paroi (24a) de la seconde chambre, la partie cylindrique (25) et l'embout cylindrique (27).

7. Installation selon la revendication 6, caractérisée en ce que ledit corps creux est fixé de façon amovible sur la première chambre, et qu'il est prévu une série de corps creux analogues et interchangeables, correspondant chacun à une pression acoustique et/ou une fréquence ultrasonore différente.

8. Installation selon l'une des revendications 1 à 7, caractérisée en ce que les parois d'au moins une des chambres (16, 24) sont en polyacrylate de méthyle, alors que l'embout (27) et la buse (25) sont en polytétrafluoréthylène.

9. Installation selon l'une des revendications 1 à 8, caractérisée en ce que les conduits (20) raccordant les première et deuxième chambres sont au moins au nombre de neuf, disposés symétriquement, que le rapport de leur longueur à leur diamètre est au moins égal à 4, que chacun présente dans la première chambre de tranquillisation (16) une entrée (20a) en forme d'embouchure de trompette, et que leurs axes respectifs sont inclinés d'un angle (β) au moins égal à 10 degrés sur l'axe.

10. Installation selon l'une des revendications 1 à 9, dans laquelle le transducteur d'ultrasons (28) est logé dans le canal formé par un manchon tubulaire (15c), traversant axialement la première chambre de tranquillisation (16), et par un perçage (17a) de la paroi (17) qui sépare les deux chambres, aligné avec ledit manchon (15c), la face active (28a) dudit transducteur (28) étant disposée transversalement à l'axe de la seconde chambre de tranquillisation (24), de façon à être au contact du liquide qui y circule, caractérisée en ce que le perçage (17a) de la paroi (17) est entouré par une collerette tronconique (17b) dont l'angle au sommet est par exemple voisin de 60 degrés, et près de la base de laquelle débouchent les conduits (20).

11. Installation selon l'une des revendications 1 à 10, caractérisée en ce que la pompe (2) est une pompe verticale immergée comportant une turbine à aubes, en ce qu'un accumulateur (6) est inséré entre la pompe (2) et la première chambre de tranquillisation (16), et en ce que la fréquence de résonance de cet accumulateur est adaptée à la fréquence de pulsation des aubes de la turbine.

12. Tête de couplage pour le contrôle ultrasonore par une technique d'immersion locale, comprenant:
   a) une première chambre de tranquillisation (16) reliée à la sortie de ladite pompe,
   b) une seconde chambre de tranquillisation (24) cylindrique, reliée à ladite première chambre par au moins un canal pour le passage du liquide,
   c) un transducteur ultrasonore (28), capable d'émettre un faisceau d'ultrasons par une face active, dirigée vers l'objet, ladite face active étant située dans la seconde chambre, centrée sur l'axe de ladite seconde chambre et perpendiculaire à cet axe,
   d) un convergent (26) coaxial à ladite seconde chambre, et comportant une entrée (26a), reliée à ladite seconde chambre et de largeur (L1) au plus égal à celle de ladite seconde chambre, et une sortie (26b) de largeur (L2) inférieur à la largeur (L1) de l'entrée et sensiblement égal à la largeur choisi par ledit jet, caractérisé en ce que la forme dudit convergent est sensiblement celle qui est obtenue par un calcul dans lequel on donne une valeur constante à l'expression:

$$Q(xy) = u_1(x) \cdot y + \ldots + u_{n+1}(x)y^{2n+1} + \ldots \quad (1)$$

dans laquelle:

$$u_1(x) = \frac{a^2+1}{2a^2} + \frac{1-a^2}{a^2} \int_0^x Z(x)dx$$

$$u_{n+1}(x) = \frac{-u_n''(x)}{2n(n+1)}$$

$$Z(x) = \frac{1}{\sqrt{2\pi}} e^{-x^2/2} \text{ et } a = L2/L1$$

toutes les dérivées de $u_1(x)$ étant calculées à partir des polynômes d'Hermite $H_n(x)$ avec

$$u_1^{(n+1)}(x) = Z^{(n)}(x) \text{ et } Z^{(n)}(x) = (-1)^n H_n(x) Z(x),$$

le calcul étant effectué pour $x = 0$ à $x = 1$ quand $y = L2/2$ après itérations; et la distance entre la face active (28a) du transducteur et la sortie (26b) du convergent est telle que ladite sortie est à la sortie de la zone de Fresnel de l'onde ultrasonore émise par le transducteur (28).

13. Tête de couplage selon la revendication 12, caractérisée en ce que le convergent (26) est prolongé dans le sens du jet par un embout cylindrique (27), de même section que celle de la sortie du convergent, et de longueur définie par le fait que la surface de la pièce à contrôler, qui est frappée par le faisceau d'ultrasons, doit être située à un maximum de pression axiale ultrasonore défini par le couple transducteur-convergent utilisé, et que le libre parcours du jet de liquide entre l'extrémité dudit embout et ladite surface de la pièce doit être le plus court possible, compte tenu des conditions opératoires, la longueur de l'embout étant en outre au moins égale à quatre fois sa plus grande largeur ou son diamètre.

14. Tête de couplage selon la revendication 12, caractérisée en ce que la seconde chambre de tranquillisation (24) est fermée, du côté de l'objet, par une paroi (24a) perpendiculaire à l'axe, qui porte une saillie (24b) dirigée vers l'intérieur de ladite chambre, cette saillie présentant une ouverture axiale (24c) dont le diamètre diminue en s'éloignant de la chambre pour se raccorder à l'entrée (26a) du convergent, soit directement, soit par l'intermédiaire d'une partie cylindrique (25) de même diamètre que ladite entrée.

**Claims**

1. An arrangement for the ultrasonic examination of an object by a local immersion technique, comprising:

– a source (1) of liquid,

– a pump (2) fed by the said source,

– a coupling head (11) fed with liquid by the said pump and capable of directing towards the object to be examined a jet of the said liquid and a beam of ultrasonic waves which is contained in the said jet and is coaxial with this jet,

means sensitive to the ultrasonic waves reflected, transmitted or diffracted by the said object when it is struck by the said jet and the said beam of ultrasonic waves, the said coupling head comprising:

a) a first tranquilization chamber (16) connected to the outlet of the said pump,

b) a second cylindrical tranquilization chamber (24) connected to the said first chamber by at least one channel for the passage of the liquid,

c) an ultrasonic transducer (28) capable of emitting a beam of ultrasonic waves by means of an active surface, which is directed towards the object, the said active surface being situated within the second chamber, centered on the axis of the said second chamber and perpendicular to this axis,

d) a converging system (26) coaxial with the said second chamber and comprising an inlet (26a) connected to the said second chamber and of width (L1) at most equal to that of the said second chamber, and an outlet (26b) of width (L2) less than the width (L1) of the inlet and substantially equal to the width selected by the said jet, characterized by the shape of the said converging system being substantially that which is obtained by a calculation in which a constant value is given to the expression:

$$Q(xy) = u_1(x) . y + \ldots + u_{n+1}(x) y^{2n+1} + \ldots \quad (1)$$

in which:

$$u_1(x) = \frac{a^2 + 1}{2a^2} + \frac{1 - a^2}{a^2} \int_0^x Z(x) dx$$

$$u_{n+1}(x) = \frac{-u_n''(x)}{2n(n+1)}$$

$$Z(x) = \frac{1}{\sqrt{2\pi}} e^{-x^2/2} \quad \text{and} \quad a = L2/L1$$

all the derivatives of $u_1(x)$ being calculated on the basis of Hermite polynomials $H_n(x)$ with

$$u_1^{(n+1)}(x) = Z^{(n)}(x) \quad \text{and} \quad Z^{(n)}(x) = (-1)^n H_n(x) Z(x),$$

the calculation being undertaken for $x = 0$ to $x = 1$ when $y = L2/2$ after iterations; and the distance between the active surface (28a) of the transducer and the outlet (26b) of the converging system being such that the said outlet is at the outlet of the Fresnel zone of the ultrasonic wave emitted by the transducer (28).

2. The arrangement as claimed in claim 1, wherein the converging system (26) is extended in the direction of the jet by a cylindrical end piece (27), of the same section as that of the outlet of the converging system and of a length determined by the fact that the surface of the object to be examined which is struck by the beam of ultrasonic waves must be situated at a maximum ultrasonic axial pressure defined by the transducer-converging system pair which is employed, and wherein the free passage of the jet of liquid between the end of the said end piece and the said surface of the object must be as short as possible, with due consideration being given to the operating conditions, the length of the end piece being moreover at least equal to four times its greatest width or its diameter.

3. The arrangement as claimed in claim 1 or 2, wherein the second tranquilization chamber (24) is closed, on the object side, by a wall (24a) which is perpendicular to the axis and which carries a projection (24b) directed towards the interior of the said chamber, this projection presenting an axial aperture (24c), the diameter of which decreases in progressing away from the chamber so as to connect up with the inlet (26a) of the converging system, either directly or by means of a cylindrical part (25) having the same diameter as the said inlet.

4. The arrangement as claimed in one of claims 1 to 3, wherein the end (29) of the cylindrical end piece (27) or of the converging system (26) is adapted to avoid any dripping of water likely to disturb the jet.

5. The arrangement as claimed in claim 4, wherein, in order to avoid any dripping of water, an annular groove is formed around the said outlet (29).

6. The arrangement as claimed in one of claims 1 to 5, wherein the lateral wall of the second chamber and the converging system form part of an integral hollow body which is fixed in a sealed manner on the first chamber and which also includes, where these exist, the wall (24a) of second chamber, the cylindrical part (25) and the cylindrical end piece (27).

7. The arrangement as claimed in claim 6, wherein the said hollow body is removably fixed on the first chamber, and there is provided a series of similar and interchangeable hollow bodies, each corresponding to a different acoustic pressure and/or ultrasonic frequency.

8. The arrangement as claimed in one of claims 1 to 7, wherein the walls of at least one of the chambers (16, 24) are constructed of methyl polyacrylate, while the connecting piece (27) and the orifice (25) are constructed of polytetrafluoroethylene.

9. The arrangement as claimed in one of claims 1 to 8, wherein the ducts (20) connecting the first and second chambers are at least nine in number, and are disposed symmetrically, wherein the ratio of their length to their diameter is at least equal to 4, wherein each one exhibits within the first tranquilization chamber (16) an inlet (20a) in the form of the mouth of a trumpet, and wherein their respective axes are inclined to the axis at an angle (β) at least equal to 10 degrees.

10. The arrangement as claimed in one of claims 1 to 9, in which the ultrasonic transducer (28) is accommodated within the channel formed by a tubular sleeve (15c) axially traversing the first tranquilization chamber (16) and by a bore (17a) in the wall (17) which separates the two chambers, this being aligned with the said sleeve (15c), the active surface (28a) of the said transducer (28) being disposed transversely to the axis of the second tranquilization chamber (24) in such a manner as to be in contact with the liquid which circulates there, wherein the bore (17a) in the wall (17) is surrounded by a frustoconical neck (17b), the angle at the vertex of which is for example approximately 60 degrees, and near to the base of which the ducts (20) discharge.

11. The arrangement as claimed in one of claims 1 to 10, wherein the pump (2) is an immersed vertical pump comprising a turbine with blades, wherein an accumulator (6) is inserted between the pump (2) and the first tranquilization chamber (16), and wherein the resonant frequency of this accumulator is adapted to the pulsation frequency of the blades of the turbine.

12. A coupling head for ultrasonic examination by a local immersion technique, comprising:

a) a first tranquilization chamber (16) connected to the outlet of the said pump,

b) a second cylindrical tranquilization chamber (24) connected to the said first chamber by at least one channel for the passage of the liquid,

c) an ultrasonic transducer (28) capable of emitting a beam of ultrasonic waves by means of an active surface, which is directed towards the object, the said active surface being situated in the second chamber, centered on the axis of the said second chamber and perpendicular to this axis,

d) a converging system (26) coaxial with the said second chamber and comprising an inlet (26a) connected to the said second chamber and of width (L1) at most equal to that of the said second chamber, and an outlet (26b) of width (L2) less than the width (L1) of the inlet and substantially equal to the width selected by the said jet, characterized by the shape of the said converging system being substantially that which is obtained by a calculation in which a constant value is given to the expression:

$$Q(xy) = u_1(x) \cdot y + \ldots + u_{n+1}(x)y^{2n+1} + \ldots \quad (1)$$

in which:

$$u_1(x) = \frac{a^2+1}{2a^2} + \frac{1-a^2}{a^2} \int_0^x Z(x)dx$$

$$u_{n+1}(x) = \frac{-u_n''(x)}{2n(n+1)}$$

$$Z(x) = \frac{1}{\sqrt{2\pi}} e^{-x^2/2} \quad \text{and} \quad a = L2/L1$$

all the derivatives of $u_1(x)$ being calculated on the basis of Hermite polynomials $H_n(x)$ with

$$u_1^{(n+1)}(x) = Z^{(n)}(x) \quad \text{and} \quad Z^{(n)}(x) = (-1)^n H_n(x) Z(x),$$

the calculation being undertaken for $x = 0$ to $x = 1$ when $y = L2/2$ after iterations; and the distance between the active surface (28a) of the transducer and the outlet (26b) of the converging system being such that the said outlet is at the outlet of the Fresnel zone of the ultrasonic wave emitted by the transducer (28).

13. The coupling head as claimed in claim 12, wherein the converging system (26) is extended in the direction of the jet by a cylindrical end piece (27), of the same section as that of the outlet of the converging system and of a length determined by the fact that the surface of the object to be examined which is struck by the beam of ultrasonic waves must be situated at a maximum ultrasonic axial pressure defined by the transducer-converging system pair which is employed, and wherein the free passage of the jet of liquid between the end of the said end piece and the said surface of the object must be as short as possible, with due consideration being given to the operating conditions, the length of the end piece being moreover at least equal to four times its greatest width or its diameter.

14. The coupling head as claimed in claim 12, wherein the second tranquilization chamber (24) is closed, on the object side, by a wall (24a) which is perpendicular to the axis and which carries a projection (24b) directed towards the interior of the said chamber, this projection presenting an axial aperture (24c), the diameter of which decreases in progressing away from the chamber so as to connect up with the inlet (26a) of the converging system, either directly or by means of a cylindrical part (25) having the same diameter as the said inlet.

**Patentansprüche**

1. Vorrichtung zur Ultraschallprüfung von zum Teil eingetauchten Bestandteilen, mit einem Tauchbad (1), mit einer aus diesem gespeisten Pumpe (2), mit einem über diese mit Flüssigkeit beaufschlagten Koppelkopf (11), mittels dessen ein Flüssigkeitsstrahl sowie ein in letzterem koaxial enthaltenes Ultraschallbündel auf das zu prüfende Bauteil gerichtet wird, mit Aufnehmern, mittels derer der von dem Bauteil reflektierte oder abgestrahlte Ultraschall empfangbar ist, wenn es von dem Flüssigkeits- und Ultraschallstrahl getroffen wird, wobei der Koppelkopf (11) aufweist:

a) eine erste, an den Ausgang der Pumpe (2) angeschlossene Beruhigungskammer (16),

b) eine zweite, zylindrische Beruhigungskammer (24), welche zum Flüssigkeits-Durchlaß über zumindest einen Kanal (20) an die erste Kammer (16) angeschlossen ist,

c) einen Ultraschall-Wandler (28), von dessen Vorderseite (28a) ein Ultraschallbündel auf das (Prüf-)Objekt gerichtet werden kann, wobei diese Vorderseite sich in der zweiten Kammer befindet, zu deren Achse zentriert ist und zu dieser Achse senkrecht verläuft,

d) eine zu der zweiten Kammer (16) koaxiale Verengung (26) mit einem Einlaß (26a), der an die zweite Kammer angeschlossen und dessen lichte Weite (L1) jener der zweiten Kammer zumindest gleich ist, sowie mit einem Auslaß (26b), dessen lichte Weite (L2) kleiner als die Einlaß-Weite (L1) und im wesentlichen gleich der eingestellten Flüssigkeitsstrahl-Breite ist,

dadurch gekennzeichnet, daß die Gestalt der Verengung (26) im wesentlichen durch folgende Berechnung gegeben ist, worin der Ausdruck

$$Q(xy) = u_1(x) \cdot y + \ldots + u_{n+1}(x)y^{2n+1} + \ldots \qquad (1)$$

einen konstanten Wert hat und worin

$$u_1(x) = \frac{a^2+1}{2a^2} + \frac{1-a^2}{a^2} \cdot \int_0^x Z(x)dx$$

sowie

$$u_{n+1}(x) = \frac{-u_n''(x)}{2n(n+1)}$$

$$Z(x) = \frac{1}{\sqrt{2\pi}} \cdot e^{-x^2/2} \qquad a = L2/L1$$

ist und wobei alle Ableitungen von $u_1(x)$ aus Hermite-Polynomen $H_n(x)$ gemäß

$$u_1^{(n+1)}(x) = Z^{(n)}(x) \quad \text{und} \quad Z^{(n)}(x) = (-1)^n H_n(x) Z(x),$$

bestimmt werden, wobei ferner die Berechnung für x = 0 bis x = 1 bei y = L2/2 in Iterationsschritten erfolgt, und daß der Abstand zwischen der Vorderseite (28a) des Wandlers (28) und dem Auslaß (26b) der Verengung 26) so bemessen ist, daß der genannte Auslaß der Fresnelzonen-Ausgang der vom Wandler (28) abgestrahlten Ultraschallwelle ist.

2. Vorrichtung nach Anspruch 1, dadurch gekennzeichnet, daß die Verengung (26) in Richtung des Flüssigkeitsstrahls sich durch ein zylindrisches Mundstück (27) von gleichem Querschnitt wie am Ausgang der Verengung fortsetzt, und zwar mit solcher Länge, daß die von dem Ultraschallbündel getroffene Fläche des zu prüfenden Bauteils einem maximalen Ultraschall-Axialdruck ausgesetzt ist, der sich aus der benutzten Paarung von Wandler und Verengung ergibt, und daß der freie Weg des Flüssigkeitsstrahls zwischen dem Mundstück-Ende und der genannten Bauteil-Fläche so kurz wie unter den Betriebsbedingungen möglich ist, wobei die Länge des Mundstücks zumindest vier mal so groß ist wie seine größte lichte Weite bzw. sein Durchmesser.

3. Vorrichtung nach Anspruch 1 oder 2, dadurch gekennzeichnet, daß die zweite Beruhigungskammer (24) bauteilseitig durch eine zur Achse senkrecht verlaufende Wandung (24a) abgeschlossen ist, die eine ins Innere dieser Kammer gerichtete Schulter (24b) aufweist, welche eine Axialöffnung (24c) hat, deren Durchmesser sich mit zunehmender Entfernung von der Kammer verringert, so daß der Anschluß am Einlaß (26a) der Verengung (26) entweder direkt oder unter Zwischenschaltung eines zylindrischen Abschnitts (25) von gleichem Durchmesser wie an dem genannten Einlaß erfolgt.

4. Vorrichtung nach einem der Ansprüche 1 bis 3, dadurch gekennzeichnet, daß das Ende (29) des zylindrischen Mundstücks (27) oder der Verengung (26) so ausgebildet ist, daß jeglicher Wasseraustritt verhindert wird, welcher den Flüssigkeitsstrahl stören könnte.

5. Vorrichtung nach Anspruch 4, dadurch gekennzeichnet, daß zum Verhindern eines störenden Wasseraustritts in den genannten Auslaß (29) eine Ringnut (29a) eingearbeitet ist.

6. Vorrichtung nach einem der Ansprüche 1 bis 5, dadurch gekennzeichnet, daß die Seitenwandung (24a) und die Verengung (26) Bestandteile eines einstückigen Hohlkörpers sind, der abgedichtet auf die erste Kammer (16) aufgesetzt ist und, soweit vorhanden, die Wandung (24a) der zweiten Kammer, den zylindrischen Abschnitt (25) sowie das zylindrische Mundstück (27) aufweist.

7. Vorrichtung nach Anspruch 6, dadurch gekennzeichnet, daß der genannte Hohlkörper unbeweglich auf der ersten Kammer (16) befestigt sowie mit einer Reihe von gleichartigen und auswechselbaren Hohlkörpern versehen ist, von denen jeder auf einen anderen Schalldruck und/oder eine andere Ultraschallfrequenz abgestimmt ist.

8. Vorrichtung nach einem der Ansprüche 1 bis 7, dadurch gekennzeichnet, daß die Wandungen zumindest einer der Kammern (16, 24) aus Methylpolyacrylat bestehen, wogegen das Mundstück (27) sowie die Düse (25) aus Polytetrafluorethylen bestehen.

9. Vorrichtung nach einem der Ansprüche 1 bis 8, dadurch gekennzeichnet, daß zumindest neun Kanäle (20) zur Verbindung zwischen der ersten und der zweiten Kammer (16, 24) in symmetrischer Anordnung vorhanden sind, daß sich ihre Länge zum Durchmesser wenigstens wie 4:1 verhält, daß jeder Kanal in der ersten Beruhigungskammer (16) eine trompetenförmige Öffnung (20a) aufweist und daß ihre Achsen einen Neigungswinkel ($\beta$) von wenigstens 10° zur Mittenachse aufweisen.

10. Vorrichtung nach einem der Ansprüche 1 bis 9, wobei der Ultraschall-Wandler (28) sich in einem Durchlaß befindet, der von einem die erste Beruhigungskammer (16) axial durchsetzenden Rohrstutzen (15c) sowie von einer hiermit fluchtenden Bohrung (17a) in der Abschlußwand (17) gebildet ist, welche die beiden Kammern trennt, und wobei die Vorderseite (28a) des Wandlers (28) quer zur Achse der zweiten Beruhigungskammer (24) so angeordnet ist, daß sie mit der darin umlaufenden Flüssigkeit in Berührung steht, dadurch gekennzeichnet, daß die Bohrung (17a) der Wandung (17) durch einen Konusflansch (17b) abgeschlossen ist, dessen Scheitelwinkel beispielsweise 60° beträgt und an dessen Grundfläche die Kanäle (20) münden.

11. Vorrichtung nach einem der Ansprüche 1 bis 10, dadurch gekennzeichnet, daß die Pumpe (2) eine senkrecht angeordnete Tauchpumpe mit einer Radschaufel-Turbine ist, daß sich zwischen der Pumpe (2) und der ersten Beruhigungskammer (16) ein Speicher (6) befindet und daß die Resonanzfrequenz des Speichers (6) auf die Impulsfrequenz der Turbinen-Radschaufeln abgestimmt ist.

12. Koppelkopf für die Ultraschall-Prüfung mittels eines Tauchbades, mit:

a) einer ersten, an den Ausgang der Pumpe (2) angeschlossenen Beruhigungskammer (16),

b) einer zweiten, zylindrischen Beruhigungskammer (24), welche zum Flüssigkeits-Durchlaß über zumindest einen Kanal (20) an die erste Kammer (16) angeschlossen ist,

c) einem Ultraschall-Wandler (28), von dessen Vorderseite (28a) ein Ultraschallbündel auf das (Prüf-)Objekt gerichtet werden kann, wobei diese Vorderseite sich in der zweiten Kammer befindet, zu deren Achse zentriert ist und zu dieser Achse senkrecht verläuft,

d) einer zu der zweiten Kammer (16) koaxialen Verengung (26) mit einem Einlaß (26a), der an die zweite Kammer angeschlossen und dessen lichte Weite (L1) jener der zweiten Kammer zumindest gleich ist, sowie mit einem Auslaß (26b), dessen lichte Weite (L2) kleiner als die Einlaß-Weite (L1) und im wesentlichen gleich der eingestellten Flüssigkeitsstrahl-Breite ist,

dadurch gekennzeichnet, daß die Gestalt der Verengung (26) im wesentlichen durch folgende Berechnung gegeben ist, worin der Ausdruck

$$Q(xy) = u_1(x) \cdot y + \ldots + u_{n+1}(x) \cdot y^{2n+1} + \ldots \quad (1)$$

einen konstanten Wert hat und worin

$$u_1(x) = \frac{a^2+1}{2a^2} + \frac{1-a^2}{a^2} \cdot \int_0^x Z(x)\,dx$$

sowie

$$u_{n+1}(x) = \frac{-u_n''(x)}{2n(n+1)}$$

$$Z(x) = \frac{1}{\sqrt{2\pi}} \cdot e^{-x^2/2} \qquad a = L2/L1$$

ist und wobei alle Ableitungen von $u_1(x)$ aus Hermite-Polynomen $H_n(x)$ gemäß

$$u_1^{(n+1)}(x) = Z^{(n)}(x) \quad \text{und} \quad Z^{(n)}(x) = (-1)^n H_n(x) Z(x),$$

bestimmt werden, wobei ferner die Berechnung für x = 0 bis x = 1 bei y = L2/2 in Iterationsschritten erfolgt, und daß der Abstand zwischen der Vorderseite (28a) des Wandlers (28) und dem Auslaß (26b) der Verengung (26) so bemessen ist, daß der genannte Auslaß der Fresnelzonen-Ausgang der vom Wandler (28) abgestrahlten Ultraschallwelle ist.

13. Koppelkopf nach Anspruch 12, dadurch gekennzeichnet, daß die Verengung (26) in Richtung des Flüssigkeitsstrahls sich durch ein zylindrisches Mundstück (27) von gleichem Querschnitt wie am Ausgang der Verengung fortsetzt, und zwar mit solcher Länge, daß die von dem Ultraschallbündel getroffene Fläche des zu prüfenden Bauteils einem maximalen Ultraschall-Axialdruck ausgesetzt ist, der sich aus der benutzten Paarung von Wandler und Verengung ergibt, und daß der freie Weg des Flüssigkeitsstrahls zwischen dem Mundstück-Ende und der genannten Bauteil-Fläche so kurz wie unter den Betriebsbedingungen möglich ist, wobei die Länge des Mundstücks zumindest vier mal so groß ist wie seine größte lichte Weite bzw. sein Durchmesser.

14. Koppelkopf nach Anspruch 12, dadurch gekennzeichnet, daß die zweite Beruhigungskammer (24) bauteilseitig durch eine zur Achse senkrecht verlaufende Wandung (24a) abgeschlossen ist, die eine ins Innere dieser Kammer gerichtete Schulter (24b) aufweist, welche eine Axialöffnung (24c) hat, deren Durchmesser sich mit zunehmender Entfernung von der Kammer verringert, so daß der Anschluß am Einlaß (26a) der Verengung (26) entweder direkt oder unter Zwischenschaltung eines zylindrischen Abschnitts (25) von gleichem Durchmesser wie an dem genannten Einlaß erfolgt.

FIG.:1

FIG.: 10

FIG.: 2

19 a
16
15
20a
15c
28
15a
30 15b 17
18
21
20 22
11
17b
25
26a
26
26b
27(11a) 29
2R2
29a
28a 2R1
24
24c
17a
24a 24b
23
31
$\ell$
f

FIG.: 3

A
B
X
C
28a
M1
M2
M3
Pression
ultrasonore
28a
26a 26
26b
P
P'

FIG.:4

FIG.:5

FIG.:6

FIG.: 7

$R_1 = 9\,mm$
$R_2 = 5\,mm$

$\ell = 52\,mm$

FIG.: 8

$R_1 = 17\,mm$
$R_2 = 5\,mm$

$\ell = 100\,mm$

FIG.: 9

$R_1 = 15\,mm$
$R_2 = 5\,mm$

$\ell = 32,4\,mm$